Europäisches Patentamt

European Patent Office

Office européen des brevets

(19)

(11) **EP 1 160 730 A1**

(12) **EUROPEAN PATENT APPLICATION**
published in accordance with Art. 158(3) EPC

(43) Date of publication:
**05.12.2001 Bulletin 2001/49**

(21) Application number: **00977863.0**

(22) Date of filing: **22.11.2000**

(51) Int Cl.⁷: $G06T\ 7/60$, $G06T\ 1/00$

(86) International application number:
**PCT/JP00/08238**

(87) International publication number:
**WO 01/45048 (21.06.2001 Gazette 2001/25)**

(84) Designated Contracting States:
**DE FR GB NL**

(30) Priority: **15.12.1999 JP 35597599**

(71) Applicant: **Nikon Corporation
Tokyo 100-8831 (JP)**

(72) Inventors:
• **NOMURA, Hitoshi Nikon Corporation I.P.D.
Chiyoda-ku Tokyo 100-8331 (JP)**

• **SHIMA, Toru Nikon Corporation I.P.D.
Chiyoda-ku Tokyo 100-8331 (JP)**

(74) Representative: **Kern, Wolfgang, Dipl.-Ing. et al
Patentanwälte Kern, Brehm & Partner GbR
Albert-Rosshaupter-Strasse 73
81369 München (DE)**

(54) **METHOD AND APPARATUS FOR EXTRACTING FEATURE OF IMAGE, MONITOR AND TEST SYSTEM, EXPOSURE SYSTEM, AND INTERFACE SYSTEM**

(57) An object of the present invention is to provide an image feature extraction apparatus (hereinafter, referred to as "the present apparatus") for monitoring an object based on shot images, wherein a characteristic of a matter in the object is extracted at high speed and with facility.

The present apparatus initially shoots the object to generate a differential image signal. It processes the differential image signal row by row to detect a left end edge and a right end edge, and stores information on these end edges as a characteristic of a matter. In this connection, the present apparatus preferably expands/contracts the detected end edges for noise elimination. The present apparatus also preferably obtains a calculation such as a matter area and a matter position from the information on the end edges in order to judge occurrence of anomaly in the object based on the calculation.

The processing described above is performed on two end edges per row on the screen. The amount of information to be processed is significantly reduced as compared with the cases where the processing is performed pixel by pixel, thereby realizing high-speed, simple processing.

Fig. 6

(a) DIFFERENTIAL IMAGE SIGNAL

(b) DETECTION OF END EDGES

(c) EXPANSION PROCESSING

(d) CONTRACTION PROCESSING

# Description

## *BACKGROUND OF THE INVENTION*

### *1. Field of the Invention*

The present invention relates to an image feature extraction apparatus and a method of extracting characteristics from object-shot image signals.

The present invention also relates to a monitoring and inspection system, an exposure system, and an interface system having an image feature extraction apparatus.

### *2. Description of the Related Art*

Conventionally, there are known image feature extraction apparatuses which extract a characteristic of an object based on object-shot image signals. Such image feature extraction apparatuses are used in a variety of scenes including supervisory applications such as intruder discovery, pattern inspection applications in semiconductor fabrication, and applications for determining parts positions on fabrication lines in a plant.

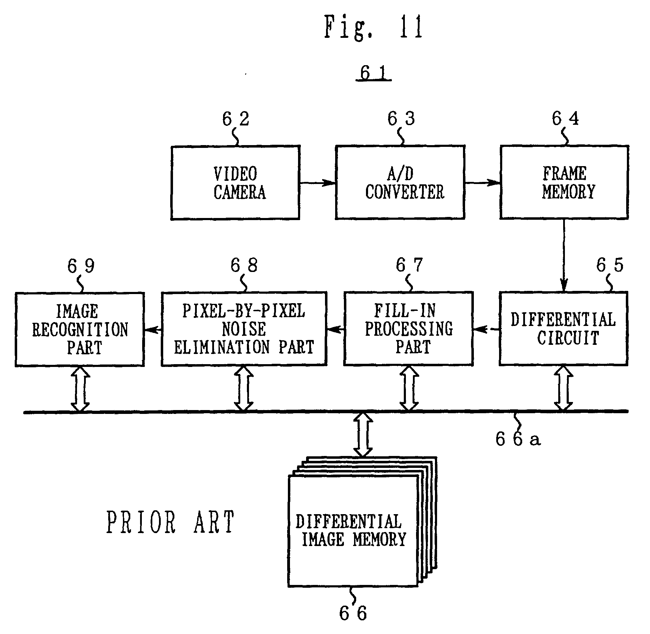

Fig. 11 is a block diagram showing an embodiment of an image feature extraction apparatus of this type.

In the image feature extraction apparatus 61 of such a configuration, an image signal shot by a video camera 62 is digitized through an A/D converter 63 before temporarily stored into a frame memory 64.

A differential circuit 65 spatially differentiates the image signal in the frame memory 64 to generate a differential image signal (image signal including extracted edges and the like). The differential circuit 65 temporarily stores the generated differential image signal into a differential image memory 66 through a bus 66a.

A fill-in processing part 67 reads the differential image signal from the differential image memory 67 and fills in the flat portions corresponding to edge-to-edge spaces to generate a binary-coded image signal which simply represents in binary the matter within the object. The fill-in processing part 67 temporarily stores the binary-coded image signal into the differential image memory 66.

Subsequently, a pixel-by-pixel noise elimination part 68 reads pixel by pixel the binary-coded image signal from the differential image memory 66, and executes contraction processing and expansion processing pixel by pixel.

The contraction processing provides such processing that reference is made to peripheral pixels around a pixel to be processed (the target pixel of processing), and if there is any pixel other than those of a matter (for example, pixel value "0"), the particular pixel to be processed is erased. Such contraction processing eliminates noise components including isolated points which are not continuous to peripheral pixels.

Meanwhile, in the expansion processing here, reference is initially made to peripheral pixels around a pixel to be processed (the target pixel of processing). Then, if the peripheral pixels include any pixel that represents a matter (for example, pixel value "1"), that pixel to be processed is replaced with a "pixel representing a matter." By such expansion processing, the pixel representing a matter expands in all directions to eliminate choppy noise within the screen. The pixel-by-pixel noise elimination part 68 stores the binary-coded image signal thus completed of noise elimination into the differential image memory 66 again.

Such pixel-by-pixel execution of the contraction processing and expansion processing eliminates noise from the binary-coded image signal.

Next, an image recognition part 69 processes pixel by pixel the binary-coded image signal completed of noise elimination, to execute matter recognition, human body detection, or the like.

In such a conventional example, the processing is executed on a pixel-by-pixel basis in each step in the fill-in processing part 67, the pixel-by-pixel noise elimination part 68, and the image recognition part 69 described above. As a result, there has been a problem that the processing is repeated on every one of several ten thousands to several millions of image-constituting pixels, greatly increasing the amount of information necessary to be processed in the entire apparatus.

In particular, the pixel-by-pixel noise elimination part 68 must execute the complicated 2D image processing on each of the pixels one by one, and thus undergoes extreme concentration of load of information processing. On that account, there has been a problem of a large decrease in the throughput of the whole processing steps.

Moreover, the pixel-by-pixel noise elimination part 68 must refer to pixel values before the processing at appropriate times in order to perform the 2D image processing. Therefore, image data before and after the 2D image processing is performed need to be stored separately, requiring a plurality of frames of memory.

Due to such reasons, high-speed information processing devices and memories with large capacity and high speed are indispensable to the image feature extraction apparatus 61 of the conventional example, which increases the cost of the entire apparatus.

Besides, moving images need to be processed particularly for the supervisory applications such as human body detection. On that account, a number of images captured in succession must be processed without delay (in real time). Therefore, substantially heightening the speed of image processing has been greatly requested for such applications.

## *DISCLOSURE OF THE INVENTION*

In view of the foregoing, an object of the present invention is to provide an image feature extraction apparatus capable of heightening the processing speed and significantly reducing in required memory capacity.

Moreover, another object of the present invention is to provide a monitoring and inspection system, an exposure system, and an interface system having such an image feature extraction apparatus.

Hereinafter, description will be given of the present invention.

An image feature extraction apparatus of the present invention comprises: a differential image signal generating part for shooting an object to generate a differential image signal; an edge coordinate detecting part for processing row by row the differential image signal output from the differential image signal generating part and detecting a left-end edge and a right-end edge of the object; and an edge coordinate storing part for storing, as a characteristic of a matter in the object, information about the left-end edge and the right-end edge detected row by row in the edge coordinate detecting part.

In a preferred aspect of the present invention, the differential image signal generating part executes spatial or temporal differentiation to the shot image of the object and generates the differential image signal. The edge coordinate detecting part processes the differential image signal in every row (i.e., a predetermined direction on the coordinate space of the screen) to detect a left-end edge and a right-end edge in each row. The edge coordinate storing part stores coordinate values or other information about existing left-end edges and right-end edges as a characteristic of a matter.

Such an operation mainly consists of the relatively simple process of detecting the end edge from the differential image signal (feasible by, e.g., performing threshold discrimination of the differential image signal, or a logic circuit), which enables image processing at higher speed than in the conventional example.

In addition, the amount of information on the obtained end edges is extremely small compared with the cases of processing information pixel by pixel as in the conventional example. Therefore, it is also possible to significantly reduce the memory capacity needed for the image processing.

As will be described later, important information about a matter in the object such as size and position can be easily obtained from the acquired information about the end edges. Accordingly, the image feature extraction apparatus having the above configuration as a basic configuration can be progressed to acquire various types of information on a matter.

Moreover, the image feature extraction apparatus of the present invention preferably comprises a noise elimination part for eliminating a noise component of the left-end edge and the right-end edge detected in the edge coordinate detecting part.

In this case, the image feature extraction apparatus eliminate noise in the end edges. This makes it possible to complete noise elimination at high speed since there is no need to eliminate noise of individual pixels one by one as in the conventional example.

It is also possible to significantly reduce memory capacity to be used because the memory capacity necessary for the processing is extremely small owing to eliminating noise only in the end edges.

Incidentally, this type of simple noise elimination may include such processing that not smoothly continuous edges are deleted or edges are moved (added) for smooth continuation by judging the continuity of edges or the directions where the edges succeed in adjoining rows (or consecutive frames).

The simple noise elimination may also include such processing that a large number of randomly gathered edges are judged as not essential edges but as details, textures, or other pits and projections and are deleted.

In the image feature extraction apparatus of the present invention, the above-described noise elimination part preferably includes the following processing parts (1) to (4):

(1) A left-end expansion processing part for determining a leftmost end of the left-end edge(s )in a plurality of rows which includes a row to be processed (a target row of noise elimination) when the plurality of rows contains the left-end edge, and determining a position in a further left of the leftmost end as the left-end edge of the row to be processed,
(2) A right-end expansion processing part for determining a rightmost end of the right-end edge(s) in the plurality of rows when the plurality of rows contain the right-end edge, and determining a position in a further right of the rightmost end as the right-end edge of the row to be processed,
(3) A left-end contraction processing part for erasing the left-end edge in the row to be processed, in a case where the plurality of rows includes a loss in the left-end edge, and in the other cases for determining a rightmost end of the left-end edge in the plurality of rows to determine a position in a further right of the rightmost end as the left-end edge of the row to be processed, and
(4) A right-end contraction processing part for erasing the right-end edge in the row to be processed in a case where the plurality of rows includes a loss in the right-end edge, and in the other cases for determining a leftmost end of the right-end edge in the plurality of rows to determine a position in a further left of the leftmost end as the right-end edge of the row to be processed.

The noise elimination part eliminates noise by expanding and contracting the end edges with these processing parts.

In this case, the end edges individually expand in eight directions, upward, downward, rightward, leftward, and obliquely due to the operations of the left-end and the right-end expansion processing parts. Here, edge chops are fully filled in by expanding adjacent edges.

Moreover, the end edges individually contract in eight directions, upward, downward, rightward, leftward, and obliquely due to the functions of the left-end and the right-end contraction processing parts. Here, point noises (isolated points) of edges are finely eliminated due to the contraction.

The image feature extraction apparatus of the present invention preferably comprises a feature operation part for calculating at least one of the on-screen area, the center position, and the dimension of the matter based on the right-end edge and the left-end edge of the matter stored row by row in the edge coordinate storing part.

The image feature extraction apparatus of the present invention preferably comprises an abnormal signal outputting part for monitoring whether or not a calculation from the feature operation part falls within a predetermined allowable range, and notifying occurrence of anomaly when the calculation is outside the allowable range.

In the image feature extraction apparatus of the present invention, the differential image signal generating part is preferably composed of an optical system for imaging an object and a solid-state image pickup device for shooting an object image. The solid-state image pickup device includes: a plurality of light receiving parts arranged in matrix on a light receiving plane, for generating pixel outputs according to incident light; a pixel output transfer part for transferring pixel outputs in succession from the plurality of light receiving parts; and a differential processing part for determining temporal or spatial differences among pixel outputs being transferred through the pixel output transfer part and generating a differential image signal.

Meanwhile, a method of extracting image characteristic in the present invention comprises the steps of: shooting an object to generate a differential image signal which represents an edge of a matter in the object; processing the differential image signal row by row to detect a left-end edge and a right-end edge of the matter; and storing information about the left-end edge and the right-end edge as a characteristic of the matter.

Now, a monitoring and inspection system of the present invention is for monitoring an object to judge normalcy/anomaly, comprising:

(a) an image feature extraction apparatus including

a differential image signal generating part for shooting an object to generate a differential image signal,
an edge coordinate detecting part for processing row by row the differential image signals output from the differential image signal generating part to detect a left-end edge and a right-end edge in the object, and
an edge coordinate storing part for storing, as a characteristic of a matter in the object, information about the left-end edge and the right-end edge detected row by row in the edge coordinate detecting part; and

(b) a monitoring unit for judging normalcy or anomaly of said object based on the characteristic of the object extracted by the image feature extraction apparatus.

The monitoring and inspection system of the present invention preferably comprises the noise elimination part described above.

Meanwhile, an exposure system of the present invention is for projecting an exposure pattern onto an exposure target, comprising:

(a) an image feature extraction apparatus including

a differential image signal generating part for shooting an object to generate a differential image signal,
an edge coordinate detecting part for processing row by row the differential image signals output from the differential image signal generating part and detecting a left-end edge and a right-end edge in the object, and
an edge coordinate storing part for storing, as a characteristic of a matter in the object, information about the left-end edge and the right-end edge detected row by row in the edge coordinate detecting part;

(b) an alignment detecting unit for shooting an alignment mark of the exposure target by using the image feature extraction apparatus, and detecting the position of the alignment mark according to the extracted characteristic of the object;
(c) a position control unit for positioning the exposure target in accordance with the alignment mark detected by the alignment detecting unit; and
(d) an exposure unit for projecting the exposure pattern onto the exposure target positioned by the position control unit.

The exposure system of the present invention preferably comprises the noise elimination part described above.

Meanwhile, an interface system of the present invention is for generating an input signal on the basis of information obtained from an object as human posture and motion, comprising:

(a) an image feature extraction apparatus including

a differential image signal generating part for shooting an object to generate a differential image signal,

an edge coordinate detecting part for processing row by row the differential image signals output from the differential image signal generating part to detect a left-end edge and a right-end edge in the object, and

an edge coordinate storing part for storing, as a characteristic of a matter in the object, information about the left-end edge and the right-end edge detected row by row in the edge coordinate detecting part; and

(b) a recognition processing unit for performing recognition processing based on the characteristic of the object detected by the image feature extraction apparatus, and generating an input signal according to the characteristic of the object.

The interface system of the present invention preferably comprises the noise elimination part described above.

### *BRIEF DESCRIPTION OF THE DRAWINGS*

Fig. 1 is a block diagram showing the configuration of a monitoring and inspection system 10;

Fig. 2 is a diagram showing the internal configuration of a solid-state image pickup device 13;

Fig. 3 is a flowchart explaining the operation of detecting end edges;

Fig. 4 is a flowchart explaining the expansion processing of end edges;

Fig. 5 is a flowchart explaining the contraction processing of end edges;

Fig. 6 is an explanatory diagram showing noise elimination effects from the expansion processing and contraction processing;

Fig. 7 is a flowchart explaining an area operation and abnormality decision processing;

Fig. 8 is a diagram showing the configuration of a monitoring and inspecting system 30;

Fig. 9 is a diagram showing the configuration of an exposure system 40;

Fig. 10 is a diagram showing the configuration of an interface system 50; and

Fig. 11 is a block diagram showing the conventional example of an image feature extraction apparatus.

### *BEST MODE FOR CARRYING OUT THE INVENTION*

<<First Embodiment>>

The first embodiment is an embodiment corresponding to the inventions set forth in claims 1-10.

[General Configuration of the First Embodiment]

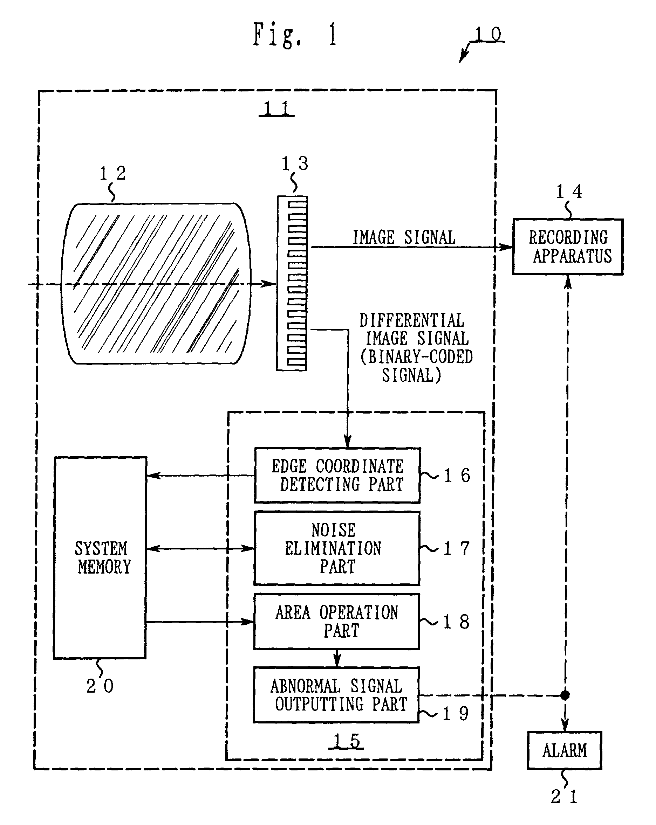

Fig. 1 is a block diagram showing the configuration of a monitoring and inspection system 10 (including an image feature extraction apparatus 11) in the first embodiment. Incidentally, in this diagram, the internal functions of a microprocessor 15 which are realized by software processing or the like are also shown as functional blocks for convenience of explanation.

In Fig. 1, a photographic lens 12 is mounted on the monitoring and inspection system 10. The imaging plane of a solid-state image pickup device 13 is placed on the image-space side of the photographic lens 12. An image signal output from the solid-state image pickup device 13 is supplied to a recording apparatus 14. Besides, a differential image signal output from the solid-state image pickup device 13 is supplied to the microprocessor 15 for image processing.

The microprocessor 15 comprises the following functional blocks.

① Edge coordinate detecting part 16 ·· to detect end edges from the differential image signal and store the coordinate information about the end edges into a system memory 20.

② Noise elimination part 17 · · to eliminate noise components from the coordinate information about the end edges stored in the system memory 20.

③ Area operation part 18 ·· to calculate the on-screen area of a matter from the end edges stored in the system memory 20.

④ Abnormal signal outputting part 19 ·· to decide whether or not the on-screen area of the matter falls within a predetermined allowable range, and, if out of the allowable range, issue a notification of the abnormal condition. The notification is transmitted to the recording apparatus 14 and an alarm 21.

[Internal Configuration of the Solid-state Image Pickup Device 13]

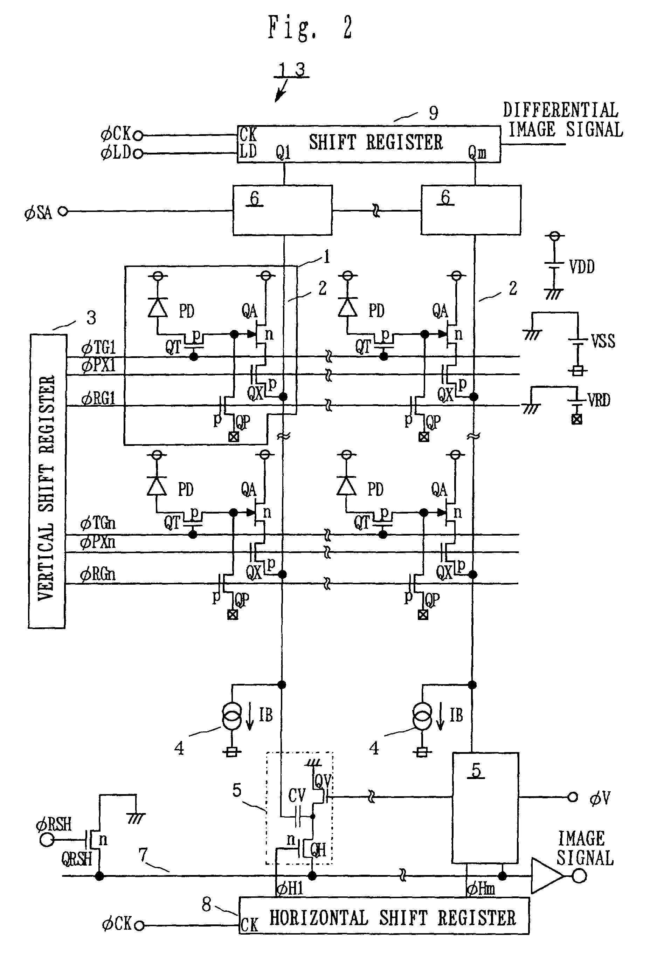

Fig. 2 is a diagram showing the internal configuration of the solid-state image pickup device 13.

In Fig. 2, unit pixels 1 are arranged on the solid-state image pickup device 13, in matrix with n rows and m columns. The unit pixels 1 comprise a photodiode PD for performing photoelectric conversion, an MOS switch QT for charge transfer, an MOS switch QP for charge resetting, an MOS switch QX for row selection, and an amplifying element QA composed of a junction field effect transistor.

The outputs of such unit pixels 1 are connected in common by each vertical column to form m vertical read lines 2.

The solid-state image pickup device 13 is also provided with a vertical shift register 3. The vertical shift register 3 outputs control pulses φTG1, φPX1, and φRG1 to control the opening/closing of the MOS switches QT, QP, and QX, so that the pixel outputs of the unit pixels 1 are output onto the vertical read lines 2. Current sources 4 are also connected to the vertical read lines 2, respectively.

Moreover, the vertical read lines 2 are connected to a horizontal read line 7 through respective difference processing circuits 5. A resetting MOS switch QRSH is connected to the horizontal read line 7. A resetting control pulse φRSH is supplied from a horizontal shift register 8 or the like to the MOS switch QRSH.

Meanwhile, the difference processing circuits 5 mentioned above are composed of a capacitor CV for charge retention, an MOS switch QV for forming a capacitor charging path, and an MOS switch QH for horizontal transfer. Parallel outputs φHI to φHm of the horizontal shift register 8 are connected to the MOS switches QH, respectively. Besides, a control pulse φV for determining the timing of charge retention is supplied from the vertical shift register 3 or the like to the difference processing circuits 5.

In addition, different value detecting circuits 6 are connected to the vertical read lines 2, respectively. The different value detecting circuits 6 are circuits for comparing vertically-transmitted old and new pixel outputs, composed of, for example, a sampling circuit and a comparison circuit for comparing the old and new pixel outputs based on the outputs of the sampling circuit. A control pulse φSA for determining the sampling timing is supplied from the vertical shift register 3 or the like to the different value detecting circuits 6.

The individual outputs of such different value detecting circuits 6 are connected to parallel inputs Q1 to Qm of a shift register 9, respectively. A control pulse φLD for determining the timing of accepting the parallel inputs and a transfer clock φCK for serial transfer are input to the shift register 9. The pulses φLD and φCK are supplied from the horizontal shift register 8 or the like, for example.

[Correspondences between the First Embodiment and the Items Described in the Claims]

Hereinafter, description will be given of the correspondences between the first invention and the claims. Incidentally, these correspondences simply provide an interpretation for reference purposes, and are not intended to limit the invention.

(a) The correspondences between the invention set forth in claim 1 and the first embodiment are as follows:

- the differential image signal generating part → the photographic lens 12 and the solid-state image pickup device 13,
- the edge coordinate detecting part → the edge coordinate detecting part 16, and
- the edge coordinate storing part → the system memory 20.

(b) The correspondence between the invention set forth in claim 2 and the first embodiment is as follows:

- the noise elimination part → the noise elimination part 17.

(c) The correspondences between the invention set forth in claim 3 and the first embodiment are as follows:

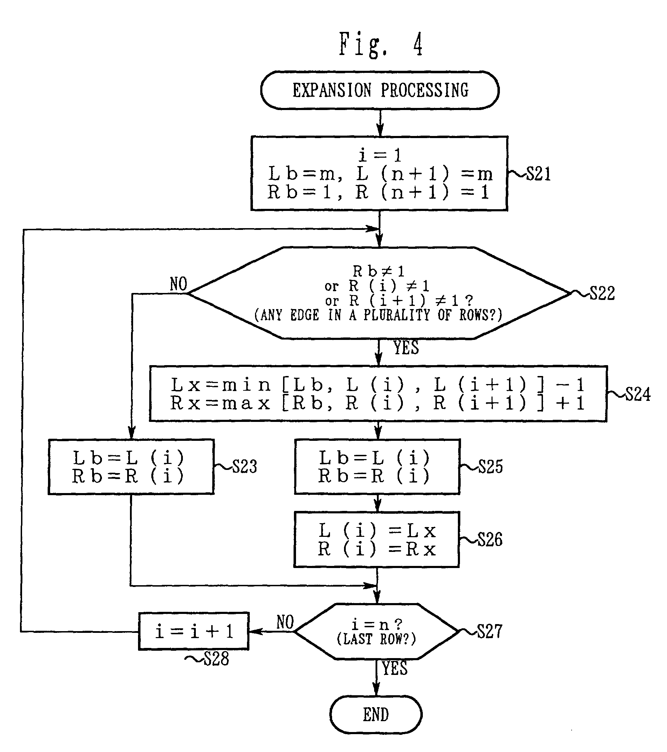

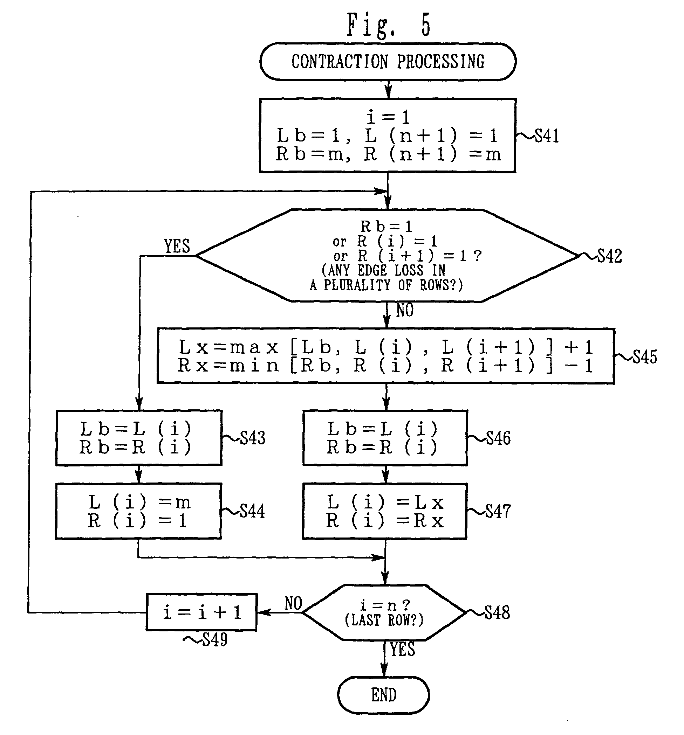

- the left-end expansion processing part → "the function of performing left-end expansion processing (Fig. 4, S22-26)" of the noise elimination part 17,
- the right-end expansion processing part → "the function of performing right-end expansion processing (Fig. 4, S22-26)" of the noise elimination part 17,
- the left-end contraction processing part → "the function of performing left-end contraction processing (Fig. 5, S42-47)" of the noise elimination part 17, and
- the right-end contraction processing part → "the function of performing right-end contraction processing (Fig. 5, S42-47)" of the noise elimination part 17.

(d) The correspondence between the invention set forth in claim 4 and the first embodiment is as follows:

- the feature operation part → the area operation part 18.

(e) The correspondence between the invention set forth in claim 5 and the first embodiment is as follows:

- the abnormal signal outputting part → the abnormal signal outputting part 19.

(f) The correspondences between the invention set forth in claim 6 and the first embodiment are as follows:

- the optical system → the photographic lens 12,
- the solid-state image pickup device → the solid-state image pickup device 13,
- the light receiving part → the photodiodes PD,
- the pixel output transfer part → the vertical shift register 3, the vertical read lines 2, the horizontal read lines 7, the horizontal shift register 8, and the MOS switches QT, QX, and QA, and
- the differential processing part → the different value detecting circuits 6 and the shift register 9.

(g) The correspondences between the invention set forth in claim 7 and the first embodiment are as follows:

· the step of generating a differential image signal → the step of generating a differential image signal within the solid-state image pickup device 13,
· the step of detecting end edges → the step of detecting end edges in the edge coordinate detecting part 16, and
· the step of storing information as to the end edges → the step for the edge coordinate detecting part 16 to record the coordinate information about the end edges into the system memory 20.

(h) The correspondences between the inventions set forth in claims 8 to 10 and the first embodiment are as follows:

· the image feature extraction apparatus → the photographic lens 12, the solid-state image pickup device 13, the edge coordinate detecting part 16, the noise elimination part 17, the area operation part 18, and the system memory 20, and
· the monitoring unit → the abnormal signal outputting part 19, the alarm 21, and the recording apparatus 14.

[Description of the Shooting Operation in the Solid-state Image Pickup Device 13]

Before the description of the operation of the entire monitoring and inspection system 10, description will be first given of the shooting operation of the solid-state image pickup device 13.

The photographic lens 12 images an object of light on the imaging plane of the solid-state image pickup device 13. Here, the vertical shift register 3 sets the MOS switches QT for charge transfer at OFF state to maintain the photodiodes PD floating. Accordingly, in the photodiodes PD, the light image is photoelectrically converted pixel by pixel, whereby signal charges corresponding to the amount of light received are successively stored into the photodiodes PD.

Along with such a signal-charge storing operation, the vertical shift register 3 selectively places the MOS switches QX in a row to be read into ON state, so that the amplifying elements QA in the row to be read are connected to the vertical read lines 2 for supply of bias currents IB.

Here, since the MOS switches QT and QP in the row to be read are in OFF state, the signal charges upon the previous read remain in the gate capacitances of the amplifying elements QA. On that account, the amplifying elements QA in the row to be read output pixel outputs of the previous frame to the vertical read lines 2. The different value detecting circuits 6 accept and retain the pixel outputs of the previous frame.

Next, the vertical shift register 3 temporarily places the MOS switches QP in the row to be read into ON state so that the residual charges in the gate capacitances are reset once.

In this state, the amplifying elements QA in the row to be read output a dark signal to the vertical read lines 2. The dark signal contains resetting noise (so-called kTC noise) and variations of the gate-to-source voltages in the amplifying elements QA.

The difference processing circuits 5 temporarily place their MOS switches QV into ON state to retain the dark current into the capacitors CV.

Subsequently, the vertical shift register 3 temporarily places the MOS switches QT on the row to be read into ON state so that the signal charges in the photodiodes PD are transferred into the gate capacitances of the amplifying elements QA. As a result, the latest pixel outputs are output from the amplifying elements QA to the vertical read lines 2.

The different value detecting circuits 6 decide whether or not the pixel outputs of the previous frame retained immediately before and the latest pixel outputs match with each other within a predetermined range, and output the decision results. The shift register 9 accepts the decision results on a row-by-row basis through the parallel input terminals Q1 to Qm.

Meanwhile, the latest pixel outputs are applied to either ones of the capacitors CV which hold the dark signal. As a result, real pixel outputs excluding the dark signal are output to the other sides of the capacitors CV.

In this state, the same transfer clock $\phi$CK is input to both the shift register 9 and the horizontal shift register 8. Then, the shift register 9 serially outputs the differential image signal for a single row. Meanwhile, the horizontal shift register 8 places the MOS switches QH for horizontal transfer into ON state in turn, so that a single row of pixel outputs are successively output to the horizontal read line 7.

The operations as described above are repeated while shifting the to-be-read row by one, so that ordinary image signals and temporally-differentiated differential image signals are output from the solid-state image pickup device 13 in succession.

[Description on the Operation of End Edge Detection]

Next, description will be given of the operation of detecting end edges by the edge coordinate detecting part 16 (the microprocessor 15, in fact).

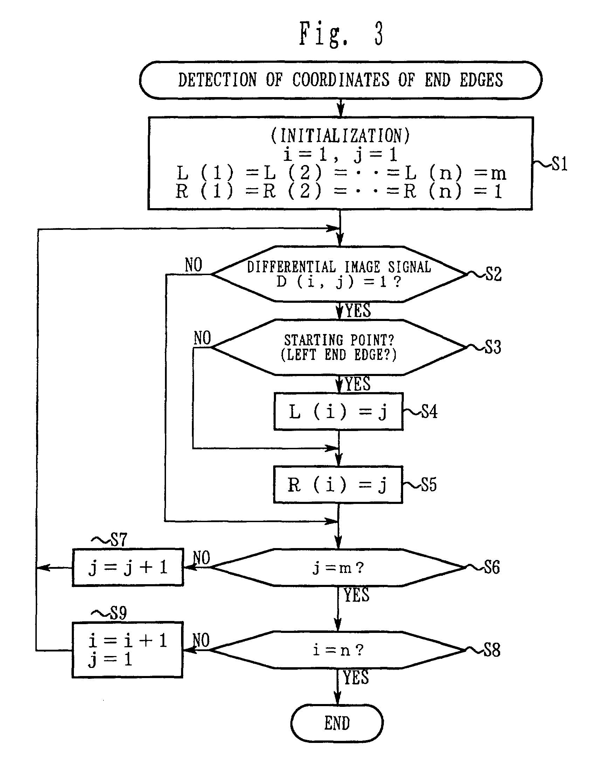

Fig. 3 is a flowchart explaining the operation of detecting end edges. Hereinafter, description will be given along the step numbers in Fig. 3.

Step S1: For a start, the edge coordinate detecting part 16 initializes variables i and j, which indicate a position of the pixel being processed at the moment, to 1. Besides, the edge coordinate detecting part 16 reserves integer arrays L (x) and R (x) having (n + 1) elements on the system memory 20. The edge coordinate detecting part 16 applies the following initialization to the integer arrays L (x) and R (x).

$$L (x) = m, R (x) = 1 \qquad [\text{where } x = 1 \text{ to } n] \qquad (1)$$

Step S2: Next, the edge coordinate detecting part 16 accepts an i-th row, j-th column differential image signal D(i,j) in synchronization with the read pulse of the solid-state image pickup device 13. If the differential image signal D(i,j) is "1," the edge coordinate detecting part 16 determines that the pixel has changed temporally (so-called motion edge), and moves the operation to Step S3. On the other hand, if the differential image signal D(i,j) is "zero," it determines that the pixel has not changed temporally, and moves the operation to Step S6.

Step S3: Whether or not the differential image signal D(i,j) is the first motion edge to be detected on the i-th row is decided. If it is the first motion edge to be detected on the i-th row, then the edge coordinate detecting unit 16 determines that it is the left-end edge, and moves the operation to Step S4. On the other hand, at all other times, the edge coordinate detecting part 16 moves the operation to Step S5.

Step S4: In accordance with the determination of the left-end edge, the edge coordinate detecting part 16 stores the pixel position j of the left-end edge on the i-th row into the integer array L(i).

Step S5: The edge coordinate detecting part 16 temporarily stores the pixel position j of the motion edge on the i-th row into the integer array R(i).

Step S6: The edge coordinate detecting unit 16 decides whether j = m or not. Here, if j ≠ m, the edge coordinate detecting part 16 determines that the processing on the i-th row is yet to be completed, and moves the operation to Step S7. On the other hand, if j = m, the edge coordinate detecting part 16 determines that the processing on the i-th row is completed, and moves the operation to Step S8.

Step S7: Here, since the processing on the i-th row is yet to be completed, the edge coordinate detecting part 16 increments j by one and returns the operation to Step S2.

Step S8: In accordance with the determination that the processing on the i-th row is completed, the edge coordinate detecting unit 16 decides whether i = n or not. Here, if i ≠ n, the edge coordinate detecting part 16 determines that the processing for a single screen is yet to be completed, and moves the operation to Step S9. On the other hand, if i = n, the edge coordinate detecting part 16 determines that the processing for a single screen is completed, and ends the operation. (Incidentally, in the cases of processing moving images, returns to Step S1 to start processing the next frame)

Step S9: Here, since the processing for a single screen is yet to be completed, the edge coordinate detecting part 16 increments i by one, restores j to 1, and then returns the operation to Step S2 to enter the processing of the next row.

Through the series of operations described above, the left-end edges on x-th rows are stored into the integer array L(x). Besides, the right-end edges on x-th rows are stored into the integer array R(x).

[Expansion Processing of End Edges]

Next, description will be given of the expansion processing of end edges by the noise elimination part 17 (the microprocessor 15, in fact).

Fig. 4 is a flowchart explaining the expansion processing of end edges. Hereinafter, the description will be given along the step numbers in Fig. 4.

Step S21: For a start, the noise elimination part 17 initializes variables as follows:

$$i = 1,$$

$$Lb = m, L(n + 1) = m, \qquad (2)$$

and

$$Rb = 1, R(n + 1) = 1. \qquad (3)$$

Step S22: Based on the values of the variables Rb, R(i), and R(i + 1), the noise elimination part 17 decides whether or not edges exist in a plurality of adjoining rows (here, three rows) including an i-th row to be processed. Here, if no edge exists in the plurality of rows, the noise elimination part 17 moves the operation to Step S23. On the other hand, if edges exist in the plurality of rows, the noise elimination part 17 moves the operation to Step S24.

Step S23: The noise elimination part 17 will not perform any edge expansion processing on the i-th row since no edge exists in the plurality of rows including the i-th row. Then, for the processing of the next row, it simply updates the variables Lb and Rb as described below, and moves the operation to Step S27.

$$Lb = L(i), Rb = R(i) \qquad (4)$$

Step S24: Since edges exist in the plurality of rows including the i-th row, the noise elimination part 17 performs the following equations to expand both the end edges on the i-th row.

$$Lx = \min[Lb, L(i), L(i + 1)] - 1 \qquad (5)$$

$$Rx = \max[Rb, R(i), R(i + 1)] + 1 \qquad (6)$$

The equation (5) determines the leftmost end of the left-end edges in the plurality of rows, and sets Lx to a position in one pixel further left of the leftmost end. Moreover, the equation (6) determines the rightmost end of the right-end edge(s) in the plurality of rows, and sets Rx to a position in one pixel further right of the rightmost end.

Step S25: As in Step S23, the noise elimination part 17, in preparation for the processing of the next row, updates the variables Lb and Rb as follows:

$$Lb = L(i), Rb = R(i). \qquad (4)$$

Step S26: The noise elimination part 17 substitutes Lx and Rx calculated by the above-stated equations (5) and (6) into L(i) and R(i) as the end edges on the i-th row.

Step S27: The noise elimination part 17 decides whether i = n or not. Here, if i ≠ n, the noise elimination part 17 determines that the processing for a single screen is yet to be completed, and moves the operation to Step S28. On the other hand, if i = n, the noise elimination part 17 determines that the processing for a single screen is completed, and ends the single round of expansion processing.

Step S28: Here, since the processing for a single screen is yet to be completed, the noise elimination part 17 increments i by one and then returns the operation to Step S22 to enter the processing of the next row.

The processing of expanding, by one pixel obliquely upward and downward, the end edges stored in the integer arrays L(x) and R(x) can be achieved by performing the series of operations described above.

[Contraction Processing of End Edges]

Next, description will be given of the contraction processing of end edges by the noise elimination part 17 (the microprocessor 15, in fact).

Fig. 5 is a flowchart explaining the contraction processing of end edges. Hereinafter, the description will be given along the step numbers in Fig. 5.

Step S41: For a start, the noise elimination part 17 initializes variables as follows:

$$i = 1,$$

$$Lb = 1, L(n + 1) = 1, \qquad (7)$$

and

$$Rb = m, R(n + 1) = m. \qquad (8)$$

Step S42: Based on the values of the variables Rb, R(i), and R(i + 1), the noise elimination part 17 decides whether or not a plurality of adjoining rows (here, three rows) which includes an i-th row to be processed includes a loss in any edge. Here, when any edge loss is found in the plurality of rows, the noise elimination part 17 moves the operation to Step S43. On the other hand, when the plurality of rows includes no edge loss, the noise elimination part 17 moves the operation to Step S45.

Step S43: The noise elimination part 17, in preparation for the processing of the next row, updates the variables Lb and Rb as follows:

$$Lb = L(i), Rb = R(i). \qquad (9)$$

Step S44: Since an edge loss is found in the plurality of rows including the i-th row, the noise elimination part 17 performs the following equations to delete the edges on the i-th row and moves the operation to Step S48.

$$L(i) = m, R(i) = 1 \qquad (10)$$

Step 545: Since the plurality of rows including the i-th row includes no edge loss, the noise elimination part 17 performs the following equations to contract both of the end edges on the i-th row.

$$Lx = \max[Lb, L(i), L(i + 1)] + 1 \qquad (11)$$

$$Rx = \min[Rb, R(i), R(i + 1)] - 1 \qquad (12)$$

The equation (11) determines the rightmost end of the left-end edge(s) in the plurality of rows, and sets Lx to a position in one pixel further right of the rightmost end. Moreover, the equation (12) determines the leftmost end of the right-end edge(s) in the plurality of rows, and sets Rx to a position in one pixel further left of the leftmost end.

Step S46: As in Step S43, the noise elimination part 17, in preparation for the processing of the next row, updates the variables Lb and Rb as follows:

$$Lb = L(i), Rb = R(i). \qquad (9)$$

Step S47: The noise elimination part 17 substitutes Lx and Rx calculated by the above-stated equations (11) and (12) into L(i) and R(i) as the end edges on the i-th row.

Step S48: The noise elimination part 17 decides whether i = n or not. Here, if i ≠ n, the noise elimination part 17 determines that the processing for a single screen is yet to be completed, and moves the operation to Step S49. On the other hand, if i = n, the noise elimination part 17 determines that the processing for a single screen is completed, and ends the single round of contraction processing.

Step S49: Here, since the processing for a single screen is yet to be completed, the noise elimination part 17 increments i by one and then returns the operation to Step S42 to enter the processing of the next row.

The processing of contracting, by one pixel obliquely upward and downward, the end edges stored in the integer arrays L(x) and R(x) can be achieved by performing the series of operations described above.

[Concerning Noise Elimination Effects obtained from the Expansion Processing and Contraction Processing]

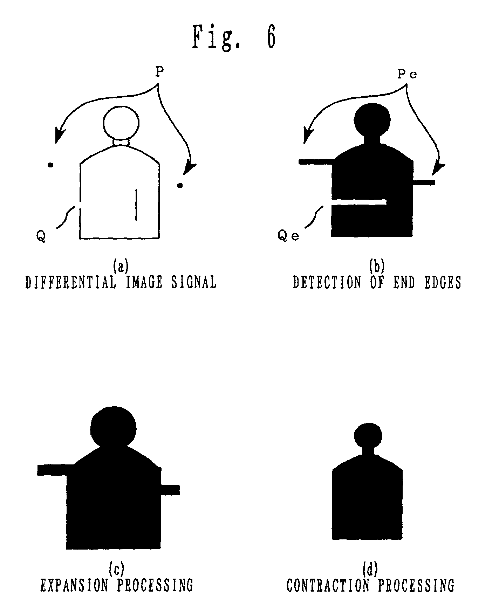

The noise elimination effects obtained from the above-described expansion processing and contraction processing will be specifically described. Fig. 6 is a diagram showing the noise elimination effects from the expansion processing and contraction processing.

As shown in Fig. 6(a), point noises p and a choppy noise Q slightly get mixed as noise components into differential image signals.

As shown in Fig. 6(b), upon the detection of the end edges, the noise components produce misrecognized edges Pe and a split edge Qe. On that account, the outline shape of the matter is partly deformed, which causes troubles in recognizing the shape and calculating the area of the matter.

Fig. 6(c) is a diagram showing a state in which the end edges containing such noise components are subjected to the above-described expansion processing one to several times. The end edges expand obliquely upward and downward by several pixels so that the split edge Qe seen in Fig. 6(b) is filled in from around. As a result, the deformation in the outline shape resulting from the split edge Qe is eliminated without fault.

Fig. 6(d) is a diagram showing a state in which the end edges given the expansion processing are subjected to the above-described contraction processing one to several times. In this case, the misrecognized edges Pe remaining in Fig. 6(c) are eliminated by contracting by several pixels the end edges obliquely upward and downward. As a result, the deformations in the outline shape resulting from the misrecognized edges Pe are eliminated without fault.

In this connection, as to such expansion processing and contraction processing, the number of times the processing is repeated, the execution order, and the width of expansion (contraction) at a time are preferably determined in accordance with image resolutions and noise conditions. Incidentally, on such a noise condition that choppy noise is relatively high and the matter edges are split to pieces, the expansion processing is preferably preceded so as to restore the matter edges. Moreover, when point noise is relatively high, the contraction processing is preferably preceded so as not to misrecognize a group of point noises as a matter.

[Area Operation and Abnormality Decision Processing]

Next, description will be given of the area operation and the abnormality decision processing by the area operation part 18 and the abnormal signal outputting part 19 (both by the microprocessor 15, in fact).

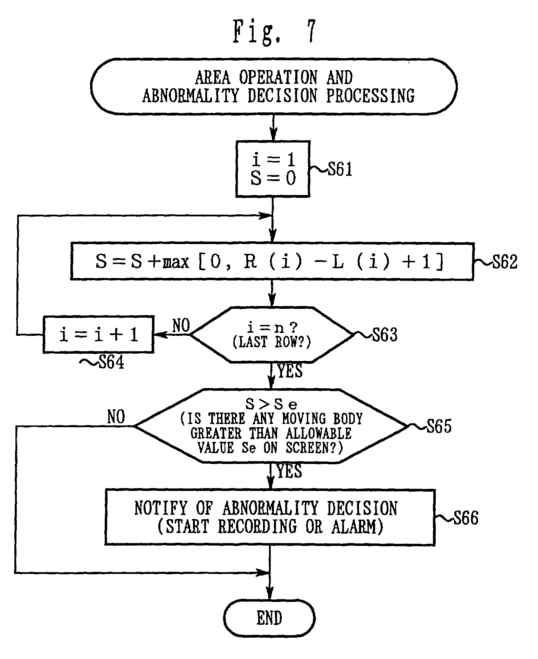

Fig. 7 is a flowchart explaining the area operation and the abnormality decision processing. Hereinafter, the description will be given along the step numbers in Fig. 7.

Step S61: For a start, the area operation part 18 initializes variables as follows:

$$i = 1,$$

and

$$S = 0.$$

Step S62: The area operation part 18 accumulates the distances between the end edges on i-th rows to an area S, after the following equation:

$$S = S + max[O, R(i) - L(i) + 1]. \qquad (13)$$

Step S63: The area operation part 18 decides whether i = n or not. Here, if i ≠ n, the area operation part 18 determines that the processing for a single screen is yet to be completed, and moves the operation to Step S64. On the other hand, if i = n, the area operation part 18 determines that the processing for a single screen is completed, and moves the operation to Step S65.

Step S64: Here, since the processing for a single screen is yet to be completed, the area operation part 18 increments i by one and then returns the operation to Step S62 to enter the processing of the next row.

Step S65: Through the processing S61-64 described above, the on-screen area S of the matter surrounded by the end edges (here, equivalent to the number of pixels the matter occupies) is calculated. The abnormal signal outputting part 19 compares magnitudes between the on-screen area S and an allowable value Se that is predetermined to distinguish a human from small animals and the like.

For example, when a solid-state image pickup device 13 with two hundred thousand pixels is used and the range of object is set at 3 m $\times$ 3 m, a single pixel is equivalent to an area of 45 mm$^2$. Here, given that a human body is 170 cm x 50 cm in size and the small animal is a mouse of 20 cm $\times$ 10 cm in size, the size of the human body is equivalent to approximately nineteen thousand pixels and the size of the mouse is to 400 pixels. In such a case, the allowable value Se is set to the order of 4000 pixels to allow the distinction between a human and a small animal.

Here, if the on-screen area S is smaller than or equal to the allowable value Se, the abnormal signal outputting part 19 judges only a small animal such as a mouse is present on the screen, and makes no anomaly notification. On the other hand, when the on-screen area S exceeds the allowable value Se, the abnormal signal outputting part 19 determines that there is a relatively large moving body such as a human on the screen, and moves the operation to Step S66.

Step S66: The abnormal signal outputting part 19 notifies occurrence of anomaly to exterior. In response to the notification, the recording apparatus 14 starts recording image signals. The alarm 21 sends an emergency alert to a remote supervisory center through a communication line or the like.

[Effects of First Embodiment]

By performing the operations described above, the first embodiment can accurately identify a moving body greater than or equal to the size of a human through information processing of end edges, to precisely notify occurrence of anomaly.

In particular, since the processing of end edges is mainly performed in the first embodiment, the integer arrays L(x) and R(x) of the order, at most, of (n + 1) in the number of elements need to be reserved on the system memory 20. Therefore, the image feature extraction apparatus 11 requires an extremely smaller memory capacity as compared with the conventional example where pixel-by-pixel frame memories are required.

Moreover, since the processing of end edges is mainly performed in the first embodiment, the noise elimination and the area operation have only to be performed with row-by-row speed at best. This produces a far greater margin in the processing speed as compared with the conventional example where pixel-by-pixel processing is mainly performed. Therefore, according to the first embodiment, an image feature extraction apparatus that monitors moving images in real time to notify occurrence of anomaly can be realized without difficulty.

Now, description will be given of other embodiments.

<<Second Embodiment>>

The second embodiment is an embodiment of the monitoring and inspection system corresponding to claims 8 to 10.

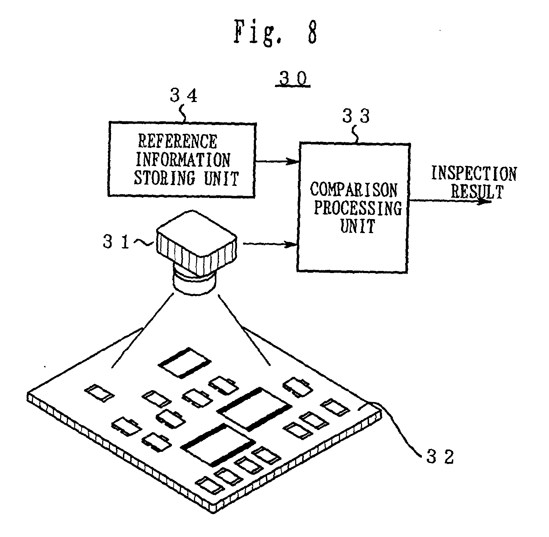

Fig. 8 is a diagram showing a monitoring and inspection system 30 for use in pattern inspection, which is used on plant lines.

Concerning the correspondences between the components described in claims 8-10 and the components shown in Fig. 8, the image feature extraction apparatus corresponds to an image feature extraction apparatus 31, and the monitoring unit corresponds to a comparison processing unit 33 and a reference information storing unit 34. Incidentally, since the internal configuration of the image feature extraction apparatus 31 is identical to that of the image feature extraction apparatus 11 in the first embodiment, description thereof will be omitted here.

In Fig. 8, an inspection target 32 is placed in the object of the image feature extraction apparatus 31. Initially, the image feature extraction apparatus 31 detects end edges from differential image signals of the inspection target. The image feature extraction apparatus 31 applies the expansion/contraction-based noise elimination to the coordinate information about the end edges. The coordination information about the edges having noise eliminated is supplied to the comparison processing unit 33. The comparison processing unit 33 compares the coordinate information about the edges with information recorded in the reference information storing unit 34 (for example, the coordinate information about the edges of conforming items) to make pass/fail evaluations for parts losses, flaws, cold joints, and the like.

In such an operation as described above, the pass/fail evaluations are made on the small amount of information, or the coordinate information about edges. Accordingly, there is an advantage that the total amount of information processed for the pass/fail evaluations is small so that the conformance inspection can be performed faster. As a result, there is provided a monitoring and inspection system particularly suited to plant lines and semiconductor fabrication lines that require higher work speed.

<<Third Embodiment>>

The third embodiment is an embodiment of the semiconductor exposure system corresponding to claims 11 to 13.

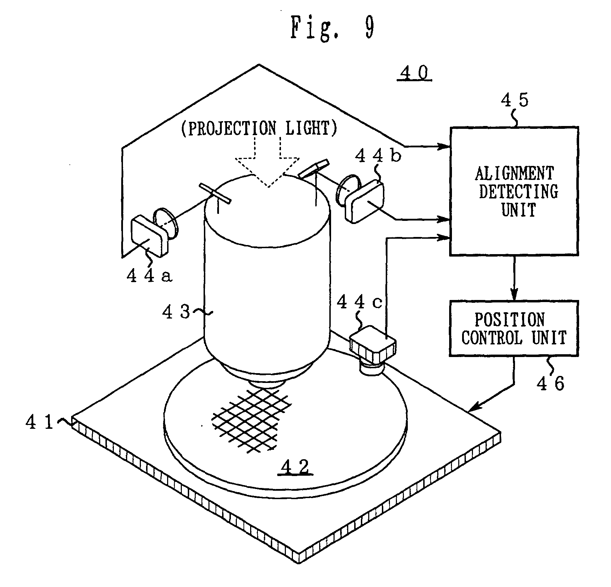

Fig. 9 is a diagram showing a semiconductor exposure system 40 to be used for fabricating semiconductors.

Concerning the correspondences between the components described in claims 11-13 and the components shown in Fig. 9, the image feature extraction apparatus corresponds to image feature extraction apparatuses 44a-c, the alignment detecting unit corresponds to an alignment detecting unit 45, the position control unit corresponds to a position control unit 46, and the exposure unit corresponds to an exposure unit 43. Incidentally, the interiors of the image feature extraction apparatuses 44a-c are identical to that of the image feature extraction apparatus 11 in the first embodiment, excepting in that end edges are detected from spatial differential image signals. On that account, description of the image feature extraction apparatuses 44a-c will be omitted here.

In Fig. 9, a wafer-like semiconductor 42 is placed on a stage 41. An exposure optical system of the exposure unit 43 is arranged over the semiconductor 42. The image feature extraction apparatuses 44a-b are arranged so as to shoot an alignment mark on the semiconductor 42 through the exposure optical system. Moreover, the image feature extraction apparatus 44c is arranged so as to shoot the alignment mark on the semiconductor 42 directly.

The image feature extraction apparatuses 44a-c detect end edges from spatial differential image signals of the alignment mark. The image feature extraction apparatuses 44a-c apply the expansion/contraction-based noise elimination to the coordinate information about the end edges. The coordination information about the edges thus eliminated of noise is supplied to the alignment detecting unit 45. The alignment detecting unit 45 detects the position of the alignment mark from the coordinate information about the edges. The position control unit 46 controls the position of the stage 41 based on the position information about the alignment mark, thereby positioning the semiconductor 42. The exposure unit 43 projects a predetermined semiconductor circuit pattern onto the semiconductor 42 positioned thus.

In such an operation as described above, the position of the alignment mark is detected based on the small amount of information, or the coordinate information about the edges. Accordingly, there is an advantage that the total amount of information processed for the position detection is small so that the position detection can be performed at high speed. As a result, there is provided a semiconductor exposure system particularly suited for semiconductor fabrication lines that require faster work speed.

<<Fourth Embodiment>>

The fourth embodiment is an embodiment of the interface system corresponding to claims 14 to 16.

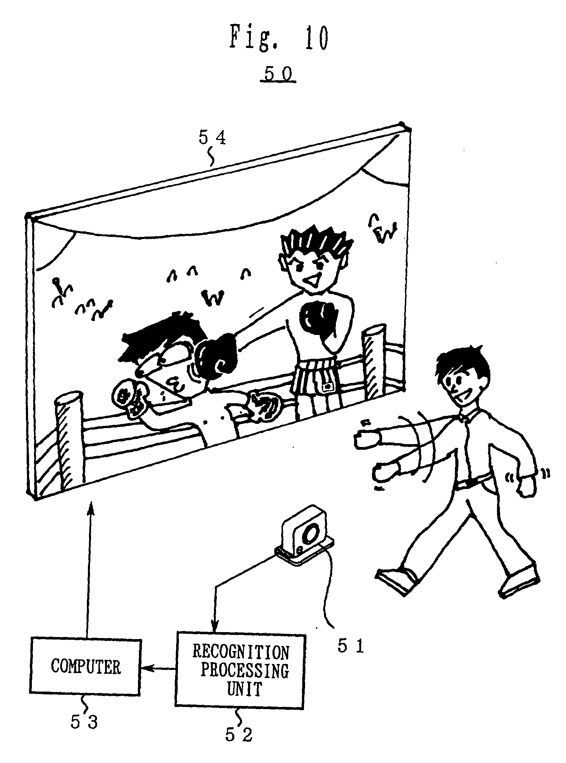

Fig. 10 is a diagram showing an interface 50 for inputting the posture information about a human to a computer 53.

Concerning the correspondences between the components described in claims 14-16 and the components shown in Fig. 10, the image feature extraction apparatus corresponds to an image feature extraction apparatus 51, and the recognition processing unit corresponds to a recognition processing unit 52. Incidentally, since the internal configuration of the image feature extraction apparatus 51 is identical to that of the image feature extraction apparatus 11 in the first embodiment, description thereof will be omitted here.

In Fig. 10, the image feature extraction apparatus 51 is arranged at a position where it shoots a human on a stage. Initially, the image feature extraction apparatus 51 detects end edges from differential image signals of the person. The image feature extraction apparatus 51 applies the expansion/contraction-based noise elimination to the coordinate information about the end edges. The coordination information about the edges thus eliminated of noise is supplied to the recognition processing unit 52. The recognition processing unit 52 performs recognition processing on the coordinate information about the edges to classify the person's posture under patterns. The recognition processing unit 52 supplies the result of such pattern classification, as the posture information about the person, to the computer 53.

The computer 53 creates game images or the like that reflect the posture information about the person, and displays the same on a monitor screen 54.

In such an operation as described above, the posture information about the person is recognized based on the small amount of information, or the coordinate information about the edges. Accordingly, there is an advantage that the total amount of information processed for the feature extraction and image recognition is small so that the image recognition can be performed at high speed. As a result, there is provided an interface system particularly suited to game machines and the like that require high speed processing.

Incidentally, while the present embodiment has dealt with inputting human posture, it is not limited thereto. The interface system of the present embodiment may be applied to inputting hand gestures (a sign language) and so on.

<<Supplemental Remarks on the Embodiments>>

In the embodiment described above, the solid-state image pickup device 13 generates differential image signals on the basis of time differentiation. Such an operation is excellent in that moving bodies can be monitored in distinction from still images such as a background. However, this operation is not restrictive. For example, differential image signals may be generated from differences among adjacent pixels (spatial differentiation). For solid-state image pickup devices capable of generating differential image signals on the basis of such spatial differentiation, edge detection solid-state image pickup devices described in Japanese Unexamined Patent Application Publication No.Hei 11-225289, devices described in Japanese Unexamined Patent Application Publication No.Hei 06-139361, light receiving element circuit arrays described in Japanese Unexamined Patent Application Publication No.Hei 8-275059, and the like may be used.

In the embodiments described above, the on-screen area of a matter is determined from the information about the end edges so that an occurrence of anomaly is notified based on the on-screen area. Such an operation is excellent in identifying the size of the matter. However, this operation is not restrictive.

For example, the microprocessor 15 may determine the center position of a matter based on the information about the end edges. In this case, it becomes possible for the microprocessor 15 to decide whether or not the center position of the matter lies in a forbidden area on the screen. Therefore, such operations as issuing a proper alarm to intruders whom enter the forbidden area on the screen become feasible.

Moreover, the microprocessor 15 may determine the dimension of a matter from the end edges, for example. In this case, it becomes possible for the microprocessor 15 to make such operations as separately counting adults and children who pass through the screen.

While the embodiments described above have dealt with an exposure system intended for semiconductor fabrication, the present invention is not limited thereto. For example, the present invention may be applied to exposure systems to be used for fabricating liquid crystal devices, magnetic heads, or the like.

Note that the present invention may be practiced in various other forms without departing from the spirit and the principle features thereof. Thus, it should be understood that the above-described embodiments are in any aspects illustrative only and not limitative. The scope of the present invention is set forth in the scope of claims for a patent, and not restricted by the main body of the specification document. Further, it is intended that all changes and modifications pertaining to scopes equivalent to the scope of claims for a patent fall within the scope of the present invention.

*INDUSTRIAL APPLICABILITY*

According to the invention set forth in claim 1 or 7, the process of detecting end edges from a differential image signal plays a central role. In this case, no more than two end edges need to be processed on each row, and thus the amount of information processing decreases greatly as compared with pixel-by-pixel processing. Therefore, high speed, simple image processing materializes with a large reduction in memory requirement and processing time. As a result, an image feature extraction apparatus particularly suited to real-time monitoring of moving images and the like is realized.

According to the invention set forth in claim 2, the end edges are subjected to noise elimination. This eliminates the need for such pixel-by-pixel complicated processing as that of the conventional example, thereby allowing a further reduction in memory requirement and processing time.

According to the invention set forth in claim 3, expansion and contraction are applied to the end edges for noise elimination. This eliminates the need for such pixel-by-pixel expansion/contraction processing as that of the conventional example, thereby allowing a further reduction in memory requirement and processing time.

According to the invention set forth in claim 4, at least one among the on-screen area of matter, the center position of the matter, or the dimension of the matter is calculated based on information of the end edges obtained. These calculations each are effective information that indicates a feature of matter. Based on such calculations, objective proper discrimination can be made as to a change of matter and the like in the object. Incidentally, the configuration of claim 4 is preferably combined with the configuration of claim 2 or 3. In this case, the reduction of choppy edges and point noises surely reduces such defects that calculations cannot be obtained because of noise, thereby making it possible to obtain accurate calculations with stability.

According to the invention set forth in claim 5, it is possible to properly discriminate an abnormal state for notification, based on a calculation from the feature operation part.

The differential image signal generating part set forth in claim 6 requires no external image memory in generating differential image signals. Therefore, the differential image signal generating part of claim 6, when combined with the constitution of the invention according to any one of claims 1-5 described above and claims 8-16, dispenses with an image memory for a single screen and the like, thereby allowing the realization of an image feature extraction apparatus that uses only an extremely small amount of memory capacity.

Any of the systems set forth in claims 8 to 16 processes edge coordinate information with a small amount of information processing as a whole, thereby allowing a speedup of the processing.

**Claims**

**1.** An image feature extraction apparatus comprising:

a differential image signal generating part for shooting an object and generating a differential image signal;

an edge coordinate detecting part for processing row by row said differential image signal output from said differential image signal generating part and detecting a left-end edge and a right-end edge of said object; and

an edge coordinate storing part for storing, as a chacteristic of a matter in said object, information about said left-end edge and said right-end edge detected row by row in said edge coordinate detecting part.

2. The image feature extraction apparatus according to claim 1, comprising

a noise elimination part for eleminating noise components of said left-end edge and said right-end edge detected in said edge coordinate detecting part.

3. The image feature extraction apparatus according to claim 2, wherein

said noise elimination part includes:

a left end expansion processing part for determining a leftmost end of said left-end edge(s) in a plurality of adjoining rows which includes a row to be processed (a target row of noise elimination) when said plurality of adjoining rows contains said left-end edge, and determining a position in a further left of the leftmost end as said left-end edge of said row to be processed;

a right-end expansion processing part for determining a rightmost end of said right-end edge(s) in said plurality of adjoining rows when said plurality of adjoining rows contains said right-end edge, and determining a position in a further right of the rightmost end as said right-end edge of said row to be processed; a left-end contraction processing part for erasing said left-end edge in said row to be processed, in a case where said plurality of adjoining rows includes a loss in said left-end edge, and

in cases other than said case, for determining a rightmost end of said left-end edges in said plurality of adjoining rows and determining a position in a further right of the rightmost end as said left-end edge of said row to be processed; and

a right-end contraction processing part for erasing said right-end edge of said row to be processed in a case where said plurality of adjoining rows includes a loss in said right-end edge, and

in cases other than said case, for determining a leftmost end of said right-end edges in said plurality of adjoining rows and determining a position in a further left of the leftmost end as said right-end edge of said row to be processed, wherein

said noise elimination part eliminates noise by expanding and contracting both of said end edges with said processing parts.

4. The image feature extraction apparatus according to claim 1, comprising

a feature operation part for calculating at least one of an on-screen area, a center position, and a dimension of said matter based on said right-end edge and said left-end edge of said matter stored row by row in said edge coordinate storing part.

5. The image feature extraction apparatus according to claim 4, comprising

an abnormal signal outputting part for monitoring whether or not a calculation from said feature operation part falls within a predetermined allowable range, and notifying occurrence of anomaly when the calculation is outside said allowable range.

6. The image feature extraction apparatus according to claim 1, wherein:

said differential image signal generating part is composed of an optical system for imaging an object and a solid-state image pickup device for shooting an object image; and

said solid-state image pickup device including

a plurality of light receiving parts arranged in matrix on a light receiving plane, for generating pixel output in accordance with incident light,

a pixel output transfer part for transferring pixel output in succession from said plurality of light receiving parts, and

a differential processing part for generating a differential image signal by determining temporal or spatial differences among pixel outputs being transferred through said pixel output transfer part.

7. A method of extracting image characteristic comprising the steps of:

shooting an object and generating a differential image signal which indicates an edge of a matter in said object;

processing said differential image signal row by row and detecting a left-end edge and a right-end edge of said matter; and

storing information about said left-end edge and said right-end edge as a characteristic of said matter.

8. A monitoring and inspection system for monitoring an object to judge normalcy/anomaly, comprising:

(a) an image feature extraction apparatus including

a differential image signal generating part for shooting said object and generating a differential image signal,
an edge coordinate detecting part for processing row by row said differential image signal output from said differential image signal generating part and detecting a left-end edge and a right-end edge of said object, and
an edge coordinate storing part for storing, as a characteristic of a matter in said object, information about said left-end edge and said right-end edge detected row by row in said edge coordinate detecting part; and

(b) a monitoring unit for judging normalcy or anomaly of said object based on said characteristic extracted by said image feature extraction apparatus.

9. The monitoring and inspection system according to claim 8, comprising
a noise elimination part for eliminating a noise component of said left-end edge and said right-end edge detected in said edge coordinate detecting part.

10. The monitoring and inspection system according to claim 9, wherein
said noise elimination part includes:

a left end expansion processing part for determining a leftmost end of said left-end edge(s) in a plurality of adjoininig rows which includes a row to be processed (a target row of noise elimination) when said plurality of adjoining rows contains said left-end edge, and determining a position in a further left of the leftmost end as said left-end edge of said row to be processed;
a right-end expansion processing part for determining a rightmost end of said right-end edge(s) in said plurality of adjoining rows when said plurality of adjoining rows contains said right-end edge, and determining a position in a further right of the rightmost end as said right-end edge of said row to be processed;
a left-end contraction processing part for erasing said left-end edge in said row to be processed, in a case where said plurality of adjoining rows includes a loss in said left-end edge, and
in cases other than said case, for determining a rightmost end of said left-end edges in said plurality of adjoining rows and determining a position in a further right of the rightmost end as said left-end edge on said row to be processed; and
a right-end contraction processing part for erasing said right-end edge of said row to be processed in a case where said plurality of adjoining rows includes a loss in said right-end edge, and
in cases other than said case, for determining a leftmost end of said right-end edges in said plurality of adjoining rows and determining a position in a further left of the leftmost end as said right-end edge of said row to be processed, wherein
said noise elimination part eliminates noise by expanding and contracting both of said end edges with said processing parts.

11. An exposure system for projecting an exposure pattern onto an exposure target, comprising:

(a) an image feature extraction apparatus including

a differential image signal generating part for shooting an object and generating a differential image signal,
an edge coordinate detecting part for processing row by row said differential image signals output from said differential image signal generating part and detecting a left-end edge and a right-end edge of said object, and
an edge coordinate storing part for storing, as a characteristic of a matter in said object, information about said left-end edge and said right-end edge detected row by row in said edge coordinate detecting part;

(b) an alignment detecting unit for shooting an alignment mark of said exposure target by using said image feature extraction apparatus, and detecting a position of said alignment mark according to said extracted characteristic of said object;
(c) a position control unit for positioning said exposure target according to said alignment mark detected by said alignment detecting unit; and
(d) an exposure unit for projecting said exposure pattern onto said exposure target positioned by said position control unit.

12. The exposure system according to claim 11, further comprising

a noise elimination part for eliminating a noise component of said left-end edge and said right-end edge detected in said edge coordinate detecting part.

13. The exposure system according to claim 12, wherein
said noise elimination part includes:

a left-end expansion processing part for determining a leftmost end of said left-end edge(s) in a plurality of adjoining rows which includes a row to be processed (a target row of noise elimination) when said plurality of adjoining rows contains said left-end edge, and determining a position in a further left of the leftmost end as said left-end edge of said row to be processed;
a right-end expansion processing part for determining a rightmost end of said right-end edge(s) in said plurality of adjoining rows when said plurality of adjoining rows contains said right-end edge, and determining a position in a further right of the rightmost end as said right-end edge of said row to be processed;
a left-end contraction processing part for erasing said left-end edge in said row to be processed, in a case where said plurality of adjoining rows includes a loss in said left-end edge, and
in cases other than said case, for determining a rightmost end of said left-end edges in said plurality of adjoining rows and determining a position in a further right of the rightmost end as said left-end edge on said row to be processed; and
a right-end contraction processing part for erasing said right-end edge of said row to be processed, in a case where said plurality of adjoining rows includes a loss in said right-end edge, and
in cases other than said case, for determining a leftmost end of said right-end edges in said plurality of adjoining rows and determining a position in a further left of the leftmost end as said right-end edge of said row to be processed, wherein
said noise elimination part eliminates noise by expanding and contracting both of said end edges with said processing parts.

14. An interface system for generating an input signal on the basis of information obtained from an object as human posture and motion, comprising:

(a) an image feature extraction apparatus including

a differential image signal generating part for shooting said object and generating a differential image signal;
an edge coordinate detecting part for processing row by row said differential image signal output from said differential image signal generating part and detecting a left-end edge and a right-end edge of said object; and
an edge coordinate storing part for storing, as a characteristic of a matter in said object, information about said left-end edge and said right-end edge detected row by row in said edge coordinate detecting part; and

(b) a recognition processing unit for performing recognition processing based on said characteristic of said object detected by said image feature extraction apparatus, and generating an input signal in accordance with said characteristic of said object.

15. The interface system according to claim 14, further comprising
a noise elimination part for eliminating a noise component of said left-end edge and said right-end edge detected in said edge coordinate detecting part.

16. The interface system according to claim 15, wherein
said noise elimination part includes:

a left-end expansion processing part for determining a leftmost end of said left-end edge(s) in a plurality of adjoining rows which includes a row to be processed (a target row of noise elimination) when said plurality of adjoining rows contains said left-end edge, and determining a position in a further left of the leftmost end as said left-end edge of said row to be processed;
a right-end expansion processing part for determining a rightmost end of said right-end edge(s) in said plurality of adjoining rows when said plurality of adjoining rows contains said right-end edge, and determining a position in a further right of the rightmost end as said right-end edge of said row to be processed;
a left-end contraction processing part for erasing said left-end edge in said row to be processed, in a case where said plurality of adjoining rows includes a loss in said left-end edge, and
in cases other than said case, for determining a rightmost end of said left-end edge in said plurality of adjoining rows and determining a position in a further right of the rightmost end as said left-end edge on said row to be processed; and

a right-end contraction processing part for erasing said right-end edge of said row to be processed in a case where said plurality of adjoining rows includes a loss in said right-end edge, and

in cases other than said case, for determining a leftmost end of said right-end edge in said plurality of adjoining rows and determining a position in a further left of the leftmost end as said right-end edge of said row to be processed, wherein

said noise elimination part eliminates noise by expanding and contracting both ofsaid end edges with said processing parts.

Fig. 1

10

11

12

13

IMAGE SIGNAL

14

RECORDING
APPARATUS

DIFFERENTIAL
IMAGE SIGNAL
(BINARY-CODED
SIGNAL)

EDGE COORDINATE
DETECTING PART — 16

NOISE
ELIMINATION
PART — 17

SYSTEM
MEMORY

AREA OPERATION
PART — 18

20

ABNORMAL SIGNAL
OUTPUTTING PART — 19

15

ALARM

21

# Fig. 2

# Fig. 3

```
DETECTION OF COORDINATES OF END EDGES
```

```
(INITIALIZATION)
i = 1, j = 1
L (1) = L (2) = · · = L (n) = m          S1
R (1) = R (2) = · · = R (n) = 1
```

NO ← DIFFERENTIAL IMAGE SIGNAL
D (i, j) = 1 ?          S2

↓ YES

NO ← STARTING POINT?
(LEFT END EDGE?)          S3

↓ YES

L (i) = j          S4

R (i) = j          S5

S7
j = j + 1 ← NO ← j = m ?          S6

↓ YES

S9
i = i + 1
j = 1 ← NO ← i = n ?          S8

↓ YES

END

# Fig. 4

# Fig. 5

CONTRACTION PROCESSING

i = 1
L b = 1, L (n + 1) = 1
R b = m, R (n + 1) = m ~S41

R b = 1
or R (i) = 1
or R (i + 1) = 1 ?
(ANY EDGE LOSS IN
A PLURALITY OF ROWS?) ~S42

YES

NO

L x = max [L b, L (i), L (i + 1)] + 1
R x = min [R b, R (i), R (i + 1)] − 1 ~S45

L b = L (i)
R b = R (i) ~S43

L b = L (i)
R b = R (i) ~S46

L (i) = m
R (i) = 1 ~S44

L (i) = L x
R (i) = R x ~S47

i = i + 1
~S49

NO

i = n ?
(LAST ROW?) ~S48

YES

END

# Fig. 6

(a)
DIFFERENTIAL IMAGE SIGNAL

(b)
DETECTION OF END EDGES

(c)
EXPANSION PROCESSING

(d)
CONTRACTION PROCESSING

EP 1 160 730 A1

# Fig. 7

AREA OPERATION AND
ABNORMALITY DECISION PROCESSING

$i = 1$
$S = 0$ — S61

$S = S + \max[0, \ R(i) - L(i) + 1]$ — S62

$i = n$ ?
(LAST ROW?) — S63

NO → $i = i + 1$ — S64

YES

$S > Se$
(IS THERE ANY MOVING BODY
GREATER THAN ALLOWABLE
VALUE Se ON SCREEN?) — S65

NO

YES

NOTIFY OF ABNORMALITY DECISION
(START RECORDING OR ALARM) — S66

END

24

Fig. 8

Fig. 9

(PROJECTION LIGHT)

40

45

ALIGNMENT
DETECTING
UNIT

POSITION
CONTROL UNIT

46

44 b

44 a

43

44 c

41

42

Fig. 10

50

COMPUTER

RECOGNITION PROCESSING UNIT

53

52

51

54

EP 1 160 730 A1

## Fig. 11

61

PRIOR ART

28

<table>
<tr><td colspan="2">**INTERNATIONAL SEARCH REPORT**</td><td colspan="2">International application No.<br>PCT/JP00/08238</td></tr>
</table>

| A. CLASSIFICATION OF SUBJECT MATTER |
|---|
| Int.Cl$^7$  G06T 7/60 |
| Int.Cl$^7$  G06T 1/00 |
| According to International Patent Classification (IPC) or to both national classification and IPC |

| B. FIELDS SEARCHED |
|---|
| Minimum documentation searched (classification system followed by classification symbols) |
| Int.Cl$^7$  G06T7/00~7/60 |
| Int.Cl$^7$  G06T1/00 |

| Documentation searched other than minimum documentation to the extent that such documents are included in the fields searched |
|---|
| Jitsuyo Shinan Koho          1926-1996      Toroku Jitsuyo Shinan Koho  1994-2001 |
| Kokai Jitsuyo Shinan Koho   1971-2001      Jitsuyo Shinan Toroku Koho  1996-2001 |

| Electronic data base consulted during the international search (name of data base and, where practicable, search terms used) |
|---|
| |

### C. DOCUMENTS CONSIDERED TO BE RELEVANT

| Category* | Citation of document, with indication, where appropriate, of the relevant passages | Relevant to claim No. |
|---|---|---|
| X<br>Y | JP, 6-231253, A (Mitsubishi Electric Corporation),<br>19 August, 1994 (19.08.94),<br>Full text; Figs. 1 to 23   (Family: none) | 1-3,7<br>4-6,8-16 |
| Y | JP, 63-163681, A (Matsushita Electric Ind. Co., Ltd.),<br>07 July, 1988 (07.07.88),<br>Full text; Figs. 1 to 5   (Family: none) | 4-5,8-10,14-16 |
| Y | DE, 4310092, A (Mitsubishi Electric Corporation),<br>30 September, 1993 (30.09.93),<br>Full text; all drawings<br>& US, 5815608, A    & JP, 6-139361, A | 6 |
| Y | JP, 9-306977, A (Komatsu Ltd.),<br>28 November, 1997 (28.11.97),<br>Full text; all drawings   (Family: none) | 11-13 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A"  document defining the general state of the art which is not considered to be of particular relevance | |
| "E"  earlier document but published on or after the international filing date | "X" document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&" document member of the same patent family |

| Date of the actual completion of the international search<br>20 February, 2001 (20.02.01) | Date of mailing of the international search report<br>27 February, 2001 (27.02.01) |
|---|---|
| Name and mailing address of the ISA/<br>Japanese Patent Office | Authorized officer |
| Facsimile No. | Telephone No. |

Form PCT/ISA/210 (second sheet) (July 1992)